# DEMANDE DE BREVET EUROPEEN

(11) **EP 4 394 621 A1**
(43) Date de publication de la demande: **03.07.2024**
(21) Numéro de dépôt: 23220213.5
(22) Date de dépôt: 26.12.2023
(51) Int. Cl.: G06F 16/383, G06F 16/36

(54) **PROCÉDÉ DE GÉNÉRATION D'UN SIGNAL COMPRENANT DES GRAPHES DE CONNAISSANCES FUSIONNÉS ET PRODUIT PROGRAMME D ORDINATEUR ASSOCIÉ**

(30) Priorité: 26.12.2022 FR 2214490
(71) Demandeur: THALES, 92190 Meudon (FR)
(72) Inventeur: BLAUDEZ, Eric, 91767 PALAISEAU CEDEX (FR); LAUDY, Claire, 91767 PALAISEAU CEDEX (FR)
(74) Mandataire: Lavoix

(57) **Abrégé**

Procédé de génération d'un signal (S) comprenant des graphes de connaissances fusionnés, le procédé de génération étant mis en oeuvre par ordinateur, et comprenant :
- une première étape de réception, à partir d'une base de données documentaire (11), d'une pluralité de fichiers informatiques (19) comprenant des objets associés les uns aux autres ;
- une première étape de génération, par une chaîne de traitement (48), d'un premier graphe de connaissances, dit graphe de fichier, pour chaque fichier informatique (19), chaque graphe de fichier comprenant des noeuds et des liens reliant les noeuds ;
- une étape d'indexation des graphes de fichier pour obtenir une base de données d'index (26) comprenant les expressions sous la forme d'un index ;
- une étape de fusion de graphes, et
- une étape d'émission du signal (S).

## Description

La présente invention concerne un procédé de génération d'un signal comprenant des graphes de connaissances fusionnés.

L'invention concerne aussi un produit programme d'ordinateur et un système de génération associés.

Des bases de données documentaires comprennent par exemple des données issues de capteurs, des images, des tables listant des attributs, des articles ou textes décrivant des sujets variés et des documentations techniques comprenant par exemple des données d'installations techniques ou de sites industriels.

De manière connue en soi, des systèmes de recherche d'informations permettent d'extraire une partie de ces données de la base de données documentaire à partir de requêtes de recherche par exemple sous forme d'images, de mots ou de phrases. De tels systèmes permettent par exemple de générer une liste de résultats comprenant le mot ou la phrase de la requête de recherche, ou des images similaires à celle de la requête de recherche. Ces systèmes permettent aussi de marquer, dans une partie des données de la base de données, par exemple dans un fichier technique ou dans un texte, des passages pertinents en fonction de la requête de recherche.

Toutefois, de tels systèmes ne sont pas entièrement satisfaisants. Par exemple, la prise de décision à partir de la liste de résultats est souvent difficile puisqu'un lien ou un contexte entre les données de bases de données documentaires et la requête de recherche est faible ou peu intuitive.

Aussi, il est souvent difficile, voire impossible, de prendre une décision à partir de la liste de résultats compte tenu d'un manque de structure ou de contexte de la liste de résultats par rapport aux données de la base de données documentaire.

Un but de la présente invention est ainsi de pailler les inconvénients précités. En particulier, un but de la présente invention est d'établir une structure entre des données d'une base documentaire et d'obtenir un signal permettant d'obtenir une association particulièrement pertinente entre une requête de recherche et les données de la base de données documentaire.

A cet effet, la présente invention porte sur un procédé de génération d'un signal comprenant des graphes de connaissances fusionnés, le procédé de génération étant mis en oeuvre par ordinateur, et comprenant :
- une première étape de réception, à partir d'une base de données documentaire, d'une pluralité de fichiers informatiques comprenant des expressions présentant une structure sémantique ;
- une première étape de génération, par une chaîne de traitement, d'un premier graphe de connaissances, dit graphe de fichier, pour chaque fichier informatique, chaque graphe de fichier comprenant des noeuds et des liens reliant les noeuds, les noeuds et les liens étant représentatifs de la structure sémantique des expressions du fichier informatique respectif, la chaîne de traitement associant une classe sémantique à chaque noeud ;
- une étape d'indexation des graphes de fichier pour obtenir une base de données d'index comprenant les expressions sous la forme d'un index ;
- une seconde étape de réception d'une requête de recherche comprenant un texte ;
- une seconde étape de génération, par ladite chaîne de traitement, d'un second graphe de connaissances, dit graphe de requête, le graphe de requête comprenant des noeuds de requête et des liens de requête représentatifs du texte de la requête de recherche, la chaîne de traitement associant, à chaque noeud de requête, la classe sémantique respective ;
- une étape d'application du graphe de requête à la base de données d'index pour obtenir, pour chaque fichier informatique, un premier score de similarité définissant une similarité entre le graphe de requête et le fichier informatique ;
- une étape de détermination, pour chaque fichier informatique, d'un second score de similarité par comparaison du graphe de requête avec le graphe de fichier correspondant ;
- une étape de fusion de graphes comprenant la fusion de chaque graphe de fichier avec le graphe de requête selon une stratégie de fusion, pour obtenir un graphe de connaissances fusionné pour chaque fichier informatique,
- une étape de fusion de scores comprenant la fusion, pour chaque fichier informatique, du premier score de similarité avec le second score de similarité selon une fonction prédéterminée, pour obtenir un score de fusion respectif ;
- une étape d'émission du signal comprenant une liste des graphes de connaissances fusionnés, les graphes de connaissances fusionnés étant classés selon les scores de fusion.

Suivant d'autres aspects avantageux, le procédé de génération comprend une ou plusieurs des caractéristiques suivantes, prise(s) isolément ou suivant toutes les combinaisons techniquement possibles :
- l'étape d'indexation comprend la génération d'une pluralité de groupes d'index, chaque groupe d'index étant un groupe parmi un groupe associé à un type des noeuds, un groupe associé à un type des liens et un groupe d'index global comprenant l'ensemble des expressions de l'index ;
- la chaîne de traitement associe des étiquettes aux expressions de chaque fichier informatique ou de la requête de recherche, chaque étiquette définissant un type d'expression parmi une pluralité de types.
- lors de l'étape d'application, un modèle compare les expressions de l'index associées à un fichier parmi les fichiers informatiques, avec le graphe de requête, pour obtenir le premier score de similarité pour ce fichier informatique ;
- le modèle est un modèle de sac de mots ;
- le modèle est le modèle BM25 ;
- le second score de similarité dépend d'une partie identique ou similaire entre le graphe de requête et le graphe de fichier correspondant, ladite partie identique ou similaire étant déterminée selon la stratégie de fusion ;
- le procédé de génération comprend en outre une étape de listage, lors de laquelle une liste intermédiaire est déterminée, la liste intermédiaire comprenant les graphes de fichier classés selon le premier score de similarité, lors de l'étape de fusion de graphes, les graphes de fichier selon la liste intermédiaire étant fusionnés avec le graphe de requête ;
- la chaîne de traitement comprend au moins un réseau de neurones recevant en entrée les expressions relatives aux graphes de fichier et/ou relatives au graphe de requête, et fournissant en sortie au moins un vecteur sémantique définissant la classe sémantique associée à chaque expression ;
- lors de l'étape d'émission, le signal est émis vers un dispositif d'affichage pour un affichage de la liste du signal par le dispositif d'affichage, et/ou dans lequel, lors de l'étape d'émission, le signal est émis vers une base de données de graphes mémorisant les graphes de connaissances fusionnés.

La présente description se rapporte également à un système de génération d'un signal comprenant des graphes de connaissances fusionnés, le système de génération comprenant :
- un premier module de réception configuré pour recevoir, à partir d'une base de données documentaire, une pluralité de fichiers informatiques comprenant des expressions présentant une structure sémantique ;
- un premier module de génération configuré pour générer, par une chaîne de traitement, un premier graphe de connaissances, dit graphe de fichier, pour chaque fichier informatique, chaque graphe de fichier comprenant des noeuds et des liens reliant les noeuds, les noeuds et les liens étant représentatifs de la structure sémantique des expressions du fichier informatique respectif, la chaîne de traitement étant configurée pour associer une classe sémantique à chaque noeud ;

- un module d'indexation configuré pour indexer les graphes de fichier pour obtenir une base de données d'index comprenant les expressions sous la forme d'un index ;
- un second module de réception configuré pour recevoir une requête de recherche comprenant un texte ;
- un second module de génération configuré pour générer, par ladite chaîne de traitement, un second graphe de connaissances, dit graphe de requête, le graphe de requête comprenant des noeuds de requête et des liens de requête représentatifs du texte de la requête de recherche, la chaîne de traitement étant configurée pour associer, à chaque noeud de requête, la classe sémantique respective ;
- un module d'application configuré pour appliquer le graphe de requête à la base de données d'index pour obtenir, pour chaque fichier informatique, un premier score de similarité définissant une similarité entre le graphe de requête et le fichier informatique ;
- un module de détermination configuré pour déterminer, pour chaque fichier informatique, un second score de similarité par comparaison du graphe de requête avec le graphe de fichier correspondant ;
- un module de fusion de graphes configuré pour fusionner chaque graphe de fichier avec le graphe de requête selon une stratégie de fusion, pour obtenir un graphe de connaissances fusionné pour chaque fichier informatique,
- un module de fusion de scores configuré pour fusionner, pour chaque fichier informatique, le premier score de similarité avec le second score de similarité selon une fonction prédéterminée, pour obtenir un score de fusion respectif ;
- un module d'émission configuré pour émettre le signal comprenant une liste des graphes de connaissances fusionnés, les graphes de connaissances fusionnés étant classés selon les scores de fusion.

La présente description se rapporte également à un produit programme d'ordinateur comportant un support lisible d'informations, sur lequel est mémorisé un programme d'ordinateur comprenant des instructions de programme, le programme d'ordinateur étant chargeable sur une unité de traitement de données et mettant en oeuvre un procédé tel que décrit précédemment lorsque le programme d'ordinateur est mis en oeuvre sur l'unité de traitement des données.

D'autres caractéristiques et avantages de l'invention apparaîtront à la lecture de la description qui suit de modes de réalisation de l'invention, donnés à titre d'exemple uniquement et en référence aux dessins qui sont :
[Fig 1], Figure 1, une vue schématique d'un exemple d'un système de génération d'un signal comprenant des graphes de connaissances fusionnés ;
[Fig 2], Figure 2, un organigramme d'un exemple de mise en oeuvre d'un procédé de génération d'un signal comprenant des graphes de connaissances fusionnés, et
[Fig 3], Figure 3, une vue schématique d'un exemple de plusieurs fichiers informatiques, de plusieurs graphes de fichier, d'une requête de recherche, d'un graphe de requête et de plusieurs graphes de connaissances fusionnés selon le signal généré par le procédé de génération de la figure 2, les graphes de connaissances fusionnés étant obtenus par fusion des graphes de fichier avec le graphe de requête.

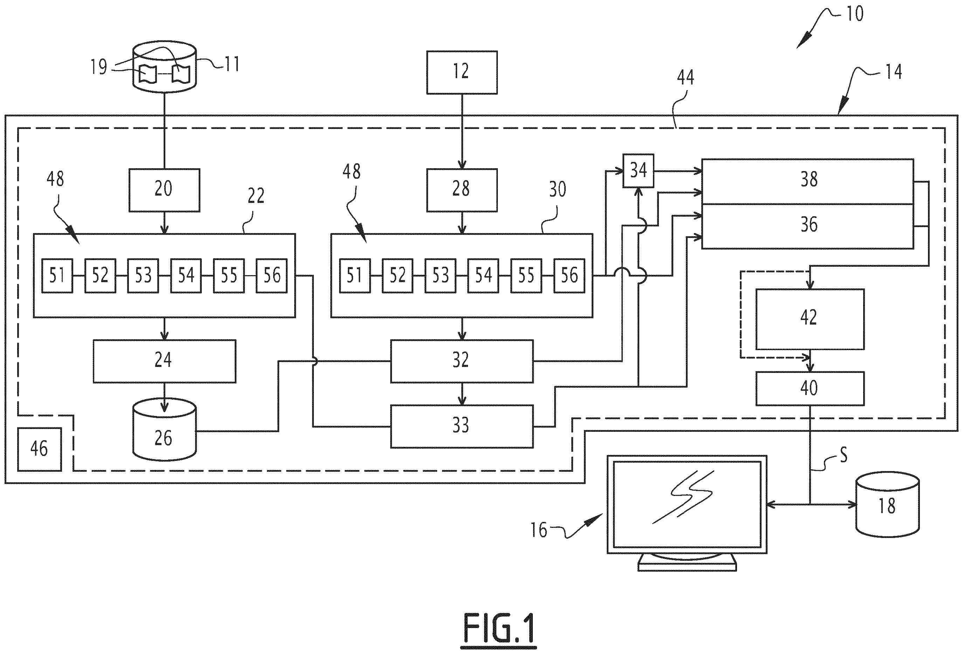

En référence à l'exemple de la figure 1, un ensemble électronique 10 comprend une base de données documentaire 11, un dispositif de saisie 12, un système électronique de génération 14, un dispositif d'affichage 16 et une base de données de graphes 18.

La base de données documentaire 11 est configurée pour mémoriser des données sous forme de fichiers informatiques 19.

Le dispositif de saisie 12 est configuré pour recevoir une saisie par exemple d'un utilisateur. Le dispositif de saisie 12 comprend par exemple, non représentés, un clavier, une souris informatique et/ou un écran tactile.

Le système électronique de génération 14 est appelé dans ce qui suit système de génération 14. Le système de génération 14 est configuré pour générer un signal S comprenant des graphes de connaissances fusionnés. Le signal S est particulier un signal numérique. En variante, le signal S est un signal analogique.

Le système de génération 14 est en particulier un ordinateur.

Plus généralement, le système de génération 14 est un calculateur électronique propre à manipuler et/ou transformer des données représentées comme des quantités électroniques ou physiques dans des registres du système de génération 14 et/ou des mémoires en d'autres données similaires correspondant à des données physiques dans des mémoires, des registres ou d'autres types de dispositifs d'affichage, de transmission ou de mémorisation.

Le dispositif d'affichage 16 comprend par exemple au moins un écran et un contrôleur configuré pour contrôler l'écran. Le contrôleur est configuré pour recevoir le signal S et pour commander un affichage sur l'écran d'une liste comprenant les graphes de connaissances fusionnés selon le signal S.

La base de base de données de graphes 18 est configurée pour recevoir le signal S est pour mémoriser la liste des graphes de connaissances fusionnés selon le signal S sous forme de données informatiques.

En référence à la figure 1, le système de génération 14 comprend un premier module de réception 20, un premier module de génération 22, un module d'indexation 24, une base de données d'index 26, un second module de réception 28, un second module de génération 30, un module d'application 32, un module de listage 33, un module de détermination 34, un module de fusion de graphes 36, un module de fusion de scores 38, un module d'émission 40 et un module de traitement additionnel 42.

Le module de listage 33 et/ou le module de traitement additionnel 42 sont facultatives.

Dans l'exemple de la figure 1, le système de génération 14 comprend une unité de traitement d'informations formée par exemple d'une mémoire 44 et d'un processeur 46 associé à la mémoire 44.

Dans l'exemple de la figure 1, le premier module de réception 20, le premier module de génération 22, le module d'indexation 24, la base de données d'index 26, le second module de réception 28, le second module de génération 30, le module d'application 32, le module de listage 33, le module de détermination 34, le module de fusion de graphes 36, le module de fusion de scores 38 et le module d'émission 40 sont réalisés chacun sous forme d'un logiciel, ou d'une brique logicielle, exécutable par le processeur 46. La mémoire 44 du système de génération 14 est alors apte à stocker un premier logiciel de réception, un premier logiciel de génération, un logiciel d'indexation, un logiciel base de données d'index, un second logiciel de réception, un second logiciel de génération, un logiciel d'application, un logiciel de listage, un logiciel de détermination, un logiciel de fusion de graphes, un logiciel de fusion de scores et un logiciel d'émission, ainsi qu'en complément facultatif un logiciel de traitement additionnel. Le processeur 46 est alors apte à exécuter chacun de ces logiciels.

En variante non représentée, le premier module de réception 20, le premier module de génération 22, le module d'indexation 24, la base de données d'index 26, le second module de réception 28, le second module de génération 30, le module d'application 32, le module de listage 33, le module de détermination 34, le module de fusion de graphes 36, le module de fusion de scores 38 et le module d'émission 40 sont réalisés chacun sous forme d'un composant logique programmable, tel qu'un FPGA (de l'anglais *Field Programmable Gate Array*), ou encore d'un circuit intégré, tel qu'un ASIC (de l'anglais *Application Spécifie Integrated Circuit).*

Lorsque le système de génération 14 est réalisé sous forme d'un ou plusieurs logiciels, c'est-à-dire sous forme d'un programme d'ordinateur, également appelé produit programme d'ordinateur, il est en outre apte à être enregistré sur un support, non représenté, lisible par ordinateur. Le support lisible par ordinateur est par exemple un medium apte à mémoriser des instructions électroniques et à être couplé à un bus d'un système informatique. A titre d'exemple, le support lisible est un disque optique, un disque magnéto-optique, une mémoire ROM, une mémoire RAM, tout type de mémoire nonvolatile (par exemple EPROM, EEPROM, FLASH, NVRAM), une carte magnétique ou une carte optique. Sur le support lisible est alors mémorisé un programme d'ordinateur comprenant des instructions logicielles.

Selon un exemple, le premier module de génération 22 comprend une chaîne de traitement 48, ou chaîne de traitement informatique 48, comprenant un premier sous-module 51, un second sous-module 52, un troisième sous-module 53, un quatrième sous-module 54, un cinquième sous-module 55 et un sixième sous-module 56. Les sous-modules 51 à 56 sont notamment réalisés chacun sous forme d'un logiciel, ou d'une brique logicielle, exécutable par le processeur 46, lorsque le premier module de génération 22 est réalisé sous forme d'un logiciel.

Le second module de génération 30 comprend de préférence une chaîne de traitement 48 identique à la chaîne de traitement 48 du premier module de génération 22, comprenant le premier sous-module 51, le second sous-module 52, le troisième sous-module 53, le quatrième sous-module 54, le cinquième sous-module 55 et le sixième sous-module 56. Par « chaîne de traitement identique », il est entendu que la chaîne de traitement 48 du second module de génération 30 est configurée pour mettre en oeuvre les mêmes fonctions ou opérations logicielles que la chaîne de traitement 48 du premier module de génération 22.

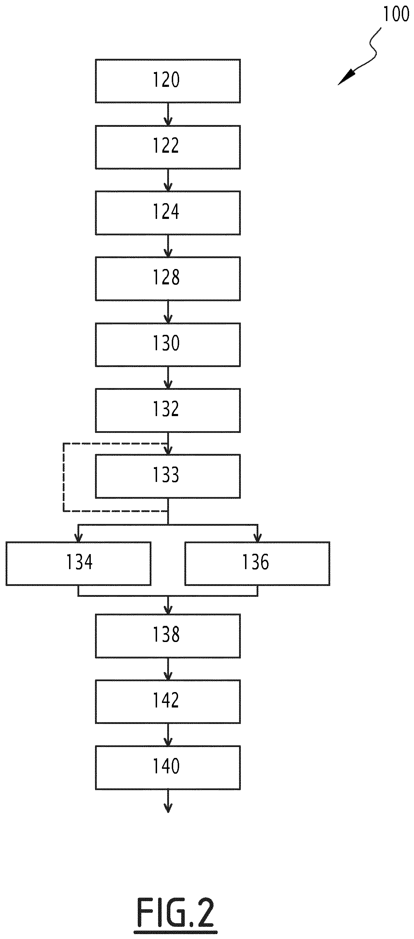

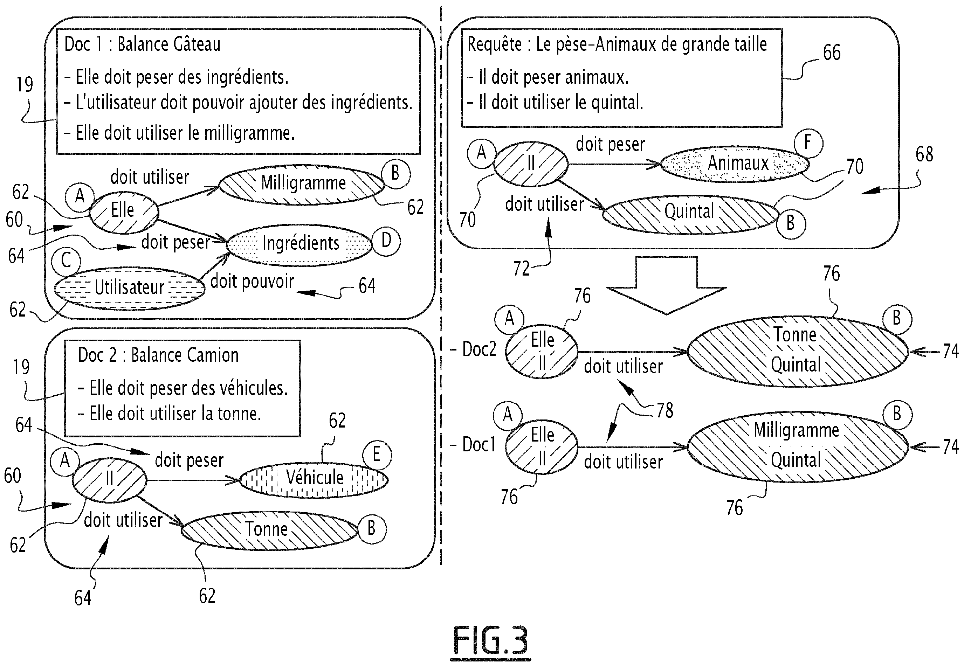

Le fonctionnement de l'ensemble électronique 10, et en particulier du système électronique de génération 12, va maintenant être décrit en référence à la figure 2, qui illustre schématiquement un exemple de mise en oeuvre d'un procédé génération 100 et en référence à la figure 3.

Dans l'exemple décrit dans ce qui suit, le procédé de génération 100 est mis en oeuvre par l'ensemble électronique 10, et en particulier par le système de génération 14. Le procédé de génération 100 est ainsi mis en oeuvre par ordinateur.

Le procédé de génération 100 comprend une première étape de réception 120, une première étape de génération 122, une étape d'indexation 124, une seconde étape de réception 128, une seconde étape de génération 130, une étape d'application 132, une étape de listage 133, une étape de détermination 134, une étape de fusion de graphes 136, une étape de fusion de scores 138, et une étape d'émission 140.

En complément optionnel, le procédé de génération 100 comprend en outre une étape de traitement additionnel 142, de préférence mise en oeuvre comme suite aux étapes de fusion de graphes 136 et de fusion de scores 138.

L'étape de listage 133 est une étape facultative du procédé 100.

Lors de la première étape de réception 120, le premier module de réception 20 reçoit, de la base de données documentaire 11, la pluralité de fichiers informatiques 19. Chaque fichier informatique 19 comprend des objets associés les uns aux autres.

Par exemple, chaque fichier informatique 19 est dans un format compatible avec un logiciel de traitement de texte, tel que par exemple .doc, .docx, .ppt, .json ou .txt.

Chaque fichier informatique 19 comprend par exemple un texte comprenant des données issues de capteurs formant des expressions, des articles et/ou des textes décrivant des sujets variés formant les expressions, des documentations techniques comprenant par exemple des données d'installations techniques et/ou de sites industriels formant les expressions. Selon un exemple, chaque fichier informatique 19 comprend, en complément optionnel ou selon une alternative, un référentiel, tel qu'un référentiel technique. Les fichiers informatique 19 forment par exemple une base documentaire d'ingénierie. Les objets sont alors des expressions présentant une structure sémantique.

En variante, chaque fichier informatique 19 est une table d'une base de données. Par exemple, chaque table comprend des attributs « modèle de véhicule », « couleur de véhicule » et « type de véhicule ». Les valeurs du type de véhicule sont par exemple respectivement « camion », « voiture », « utilitaire », « moto ». Les objets sont alors les valeurs des attributs de chaque table.

En variante encore, chaque fichier informatique 19 est une image. De manière particulièrement avantageuse, les images comprennent des balises supplémentaires, ou des métadonnées, fournies par un logiciel de reconnaissance ou d'analyse d'image, ou encore, de segmentation. Par exemple, les images représentent des personnes, et les balises indiquent quelles régions de l'image correspondent aux personnes présentes sur l'image. Les objets sont alors des régions d'intérêt des images.

Selon un exemple, le premier module de réception 20 reçoit les fichiers informatiques 19 de manière cyclique. Par exemple le premier module de réception 20 reçoit un seul fichier informatique 19, le transmet au premier module de génération 22 pour la mise en oeuvre de la première étape de génération 122, et puis reçoit un autre fichier informatique 19 de la base de données documentaire 11. Selon un autre exemple, le premier module de réception 20 reçoit l'ensemble des fichiers informatiques 19 avant une transmission de ces fichiers au premier module de génération 22.

Selon un exemple, le premier module de réception 20 envoie une requête à la base de données documentaire 11 pour interroger la base de données documentaire 11, déclenchant la transmission des fichiers informatiques 19 au premier module de réception 20.

Un exemple du texte des fichiers informatiques 19 est illustré sur la figure 3.

L'un des fichiers informatiques 19 est intitulé « Doc 1 : Balance Gâteau ». Il comprend les phrases suivantes :
« Elle doit peser des ingrédients. » ;
« L'utilisateur doit pouvoir ajouter des ingrédients. » ; et
« Elle doit utiliser le milligramme. ».

L'un des fichiers informatiques 19 est intitulé « Doc 2 : Balance Camion ». Il comprend les phrases suivantes :
« Elle doit peser des véhicules. » ; et
« Elle doit utiliser la tonne. ».

Lors de la première étape de génération 122, le premier module de génération 22 génère un premier graphe de connaissances pour chaque fichier informatique 19. Chacun de ces graphes de connaissances obtenu à partir de l'un des fichiers informatiques 19 est appelé graphe de fichier 60 dans la suite du présent document. Chaque graphe de fichier 60 est en particulier associé à l'un des fichiers informatiques 19.

En référence à la figure 3, chaque graphe de fichier 60 comprend des noeuds 62 et des liens 64 reliant les noeuds 62. Les noeuds 62 et les liens 64 sont dans cet exemple représentatifs de la structure sémantique des expressions, notamment du texte, du fichier informatique 19 respectif.

Chaque noeud 62 est doté d'une classe A, B, C, D, E, F parmi un nombre défini de classes. Par « classe», il est en particulier entendu un groupe de noeuds ou de mots de ces noeuds, partageant les mêmes propriétés.

En complément optionnel, non représenté, chaque lien 64 est également doté d'une classe respective.

Chaque graphe de fichier 60 est généré par la chaîne de traitement 48, comprenant par exemple les sous-modules 51, 52, 53, 54, 55, 56.

Par exemple, lorsque les fichiers informatiques 19 comprennent du texte, le premier sous-module 51 met en oeuvre une analyse lexicale (ou « tokenization » en anglais) permettant d'extraire des termes ou séquences de mots à partir du texte des fichiers informatiques 19. Ces termes ou séquences sont en particulier les expressions.

Le second sous-module 52 associe, au moins à certaines des expressions obtenues du premier sous-module 51, ou à chaque expression, au moins une étiquette. Chaque étiquette définit par exemple un type d'expression parmi une pluralité de types, qui sont par exemple prédéterminés.

Selon un exemple, le second sous-module 52 associe les étiquettes par une application de la librairie appelée « spaCy ».

Le troisième sous-module 53 ajoute par exemple à chaque expression une entité nommée. A titre d'illustration, lorsque l'expression est « Paris », le troisième sous-module 53 ajoute à cette expression l'entité nommée indiquant que « Paris » est une ville.

Le quatrième sous-module 54 met en oeuvre une analyse syntaxique identifiant par exemple des fonctions des expressions dans le texte de chaque fichier informatique.

Par exemple, le quatrième sous-module 54 identifie des sujets, des verbes ou prédicats et des compléments d'objets dans chaque phrase du texte. En référence à la figure 3, le quatrième sous-module 54 identifie par exemple dans la phrase « Elle doit peser des ingrédients. », l'expression « Elle » comme sujet, l'expression « doit peser » comme prédicat et l'expression « des ingrédients » comme complément d'objet.

Le cinquième sous-module 55 extrait des mots-clés à partir des expressions du texte.

Par exemple, le cinquième sous-module 55 met en oeuvre l'algorithme RAKE (de l'anglais « Rapid Automatic Keyword Extraction », nom signifiant littéralement Extraction automatique rapide de mots-clés) pour extraire les mots-clés ou met en oeuvre un algorithme comprenant une partie de l'algorithme RAKE.

Le sixième sous-module 56 détermine la classe A, B, C, D, E, F pour chaque noeud 62, qui est ici une classe sémantique. En particulier, le sixième sous-module 56 met en oeuvre un groupement de noeuds 62 similaires en fonction des expressions de chaque noeud 62. Le groupement est également appelé « clustering » en anglais.

Par exemple, le sixième sous-module 56 comprend un réseau de neurones, non représenté. Le réseau de neurones reçoit en entrée par exemple les expressions décrivant les graphes de fichier 60, notamment les noeuds 62.

Chaque expression comprend par exemple un ou plusieurs mot(s). Chaque expression est en particulier relative à une partie de l'un des graphes de fichier 60, notamment à l'un des noeuds 62 de l'un des graphes de fichier 60.

En complément optionnel, le réseau de neurones reçoit en entrée en outre les mots-clés obtenus par le cinquième sous-module 55. Cela permet en particulier d'obtenir une information additionnelle pour le réseau de neurones, afin de déterminer les classes A, B, C, D, E, F.

Le réseau de neurones fournit en sortie au moins un vecteur définissant la classe A, B, C, D, E, F associée à chaque expression. Chaque vecteur comprend de préférence plusieurs centaines de valeurs, comme par exemple 500 à 800 valeurs. Dans l'exemple de fichiers informatique 19 comprenant du texte, les vecteurs fournis par le réseau de neurones sont avantageusement des vecteurs sémantiques.

De préférence, le sixième sous-module 56 compare les vecteurs et classe dans la même classe A, B, C, D, E, F les noeuds 62 auxquels sont associés des vecteurs ayant une distance des valeurs inférieure à un seuil par exemple.

En référence à la figure 3, le noeud 62 comprenant l'expression « Elle » du fichier informatique 19 « Doc 1 » est associé à la classe A, de même que le noeud 62 comprenant l'expression « Elle » du fichier 19 « Doc 2 ».

Le noeud 62 comprenant l'expression « milligramme » du fichier informatique 19 « Doc 1 » est associé à la classe B par le sixième sous-module 56, de même que le noeud 62 comprenant l'expression « tonne » du fichier 19 « Doc 2 ». En effet, le milligramme et la tonne sont des unités de poids. Cela est détecté par le réseau de neurones, qui fournit des vecteurs pour ces expressions présentant une distance faible entre eux.

Les autres noeuds des graphes de fichier 60 présentent des expressions « Utilisateur », « Ingrédients » et « Véhicule ». Le sixième sous-module 56 associe les classes C, D et E à ces noeuds 62.

Selon un exemple, non représenté sur la figure 3, le sixième sous-module 56 associe également les classes aux liens 64 en fonction des vecteurs correspondants obtenus par le réseau de neurones.

Par exemple, le réseau de neurones est pré-entraîné selon un algorithme d'apprentissage connu en soi.

Selon une variante, la chaîne de traitement 48 génère chaque graphe de fichier 60 par mise en oeuvre uniquement d'une partie des sous-modules 51, 52, 53, 54, 55, 56.

C'est notamment le cas lorsque les fichiers informatiques 19 sont des tables de bases de données. Dans ce cas, le premier sous-module 51 extrait la valeur des attributs de la table et le sixième sous-module 56 détermine la classe A, B, C, D, E, F pour chaque noeud 62. Les noeuds 62 sont par exemple les valeurs des attributs.

Les liens 64 sont représentatifs d'un lien entre les noeuds, chaque lien 64 pouvant être doté d'une classe sémantique spécifique, ou simplement représentée par un numéro, une lettre ou un symbole sans lien avec une structure sémantique. Par exemple, si pour une table, le modèle de véhicule est « 1 », la couleur du véhicule est « rouge » et le type de véhicule est « moto », alors la chaîne de traitement 48 génère un graphe de fichier 60 dont les noeuds 62 sont par exemple « 1 », « rouge », « moto ». Les classes des noeuds 62 sont par exemple « a pour couleur », « a pour type » dans le cas de classes sémantiques, ou encore simplement des lettres ou des numéros désignant les classes.

Dans le cas où les fichiers informatiques 19 sont des images, éventuellement analysées par un logiciel de traitement d'image, la chaîne de traitement 48 génère un graphe de fichier 60 dont les noeuds 62 sont par exemple les éléments importants sur l'image, par exemple des personnes, des animaux, des objets.

Par exemple, le premier sous-module 51 génère des régions d'intérêt, soit par analyse de l'image, soit par reconnaissance de balises déjà existantes. Pour une image d'un enfant tenant un ballon de foot, les régions d'intérêt sont par exemple l'enfant et le ballon.

Le second sous-module 52 associe, au moins à certaines des régions d'intérêt obtenues du premier sous-module 51, au moins une étiquette.

Le troisième sous-module 53 ajoute par exemple à chaque région d'intérêt une entité nommée. Par exemple, pour l'enfant, une entité nommé « personne », et pour le ballon de foot, une entité nommée « ballon ».

Le sixième sous-module 56 détermine la classe A, B, C, D, E, F pour chaque noeud 62. Les noeuds 62 sont par exemple les régions d'intérêt. Le sixième sous-module associe également les classes aux liens 64 reliant les deux noeuds 62. Un tel lien 64 est par exemple « tient ». Le lien 64 n'est pas forcément un mot ou une expression et est en variante un code, un symbole, une lettre ou un chiffre.

Ainsi que précédemment décrit, le sixième sous-module comprend en exemple un réseau de neurones, qui reçoit les régions d'intérêt, notamment les noeuds 62, et/ou les étiquettes et fournit en sortie au moins un vecteur définissant la classe A, B, C, D, E, F associée à chaque région d'intérêt.

Lors de l'étape d'indexation 124, le module d'indexation 24 indexe les graphes de fichier 60 en générant au moins un index. Le module d'indexation 24 transmet l'index en particulier à la base de données d'index 26 qui mémorise l'index.

L'index comprend les objets. Par exemple, en référence à la figure 3, l'index comprend les expressions des noeuds 62 des graphes de fichier 60, à savoir « Elle », « milligramme », « Utilisateur », « ingrédients », « Véhicule » et « tonne ». De préférence, l'index comprend chaque objet, même s'il est présent dans plusieurs graphes de fichier 60, une seule fois. Par exemple, l'expression « Elle » est présente une seule fois dans l'index.

L'index est en particulier un tableau associant, à chaque objet, un ou plusieurs des fichiers informatiques 19. En particulier, pour chaque objet, l'index comprend au moins une indication du fichier informatique 19 dont le graphe de fichier 60 comprend cet objet. En d'autres termes, en particulier, l'index établit un lien entre chaque objet et un ou plusieurs des fichiers informatiques 19. Par exemple, pour le mot « Elle », l'index indique « Doc 1 » et « Doc 2 ». Selon un autre exemple, pour une région d'intérêt identifiée comme une personne, l'index indique toutes les images dans lesquelles une personne a été identifiée.

Par exemple, l'index associe, à chaque expression, l'étiquette ou les étiquettes, l'entité nommée, et/ou la classe associée à l'objet. Si les objets sont des expressions, l'index ajoute peut également ajouter une identification si l'expression est un sujet, un prédicat ou un complément objet.

Selon un exemple, le module d'indexation 24 génère une pluralité de groupes d'index formant ensemble l'index. Chaque groupe d'index est associé à un type des noeuds 62 des graphes de fichier 60, à un type des liens 64 des graphes de fichier 60 ou est un groupe d'index global comprenant l'ensemble des expressions de l'index, obtenus en particulier à partir des graphes de fichier 60.

Par exemple, l'index comprend un groupe comprenant les sujets, tels que « Elle » et « Utilisateur » dans l'exemple de la figure 3, un groupe comprenant les prédicats, tels que « doit utiliser », « doit peser » et « doit pouvoir » et un groupe comprenant les compléments d'objets, tels que « milligramme », « Ingrédients », « Véhicule » et « tonne ».

Lors de la seconde étape de réception 128, le second module de réception 28 reçoit une requête de recherche 66 comprenant un texte, une image ou encore un code. En référence à la figure 1, le second module de réception 28 reçoit la requête de recherche 66 par exemple du dispositif de saisie 12, par exemple d'un utilisateur non représenté.

Le second module de réception 28 reçoit la requête de recherche 66 par exemple dans la forme d'un fichier informatique 19, par exemple d'un fichier dans le même format que chaque fichier informatique 19.

Dans l'exemple de la figure 3, la requête de recherche 66 est intitulée « Requête : Le pèse-Animaux de grande taille » et comprend les phrases « Il doit peser des animaux. » et « Il doit utiliser le quintal ». Selon un autre exemple, dans le cas où les fichiers informatiques sont des images, la requête de recherche est une image d'un adulte tenant une balle de tennis.

Lors de la seconde étape de génération 130, le second module de génération 30 génère un second graphe de connaissances, appelé graphe de requête 68 dans la suite du présent document, dont un exemple est illustré sur la figure 3.

La seconde étape de génération 130 est de préférence identique à la première étape de génération 122, à l'exception des différences décrites ci-après. En particulier, la chaîne de traitement 48 du second module de génération 30 met en oeuvres les mêmes étapes ou traitements que la chaîne 48 du premier module de génération 22. Dans ce cas, le second module de génération 30 obtient le graphe de requête 68 au lieu de chaque graphe de fichier 60, et ceci en particulier à partir de la requête de recherche 66 au lieu de chaque fichier informatique 19.

Le graphe de requête 68 comprend une pluralité de noeuds de requête 70 et des liens de requête 72 reliant les noeuds de requête 70. Les noeuds de requête 70 et les liens de requête 72 sont en particulier représentatifs de la requête de recherche 66.

De préférence, les noeuds de requête 70 présentent les mêmes caractéristiques que les noeuds 62 et/ou les liens de requête 72 présentent les mêmes caractéristiques que les liens 64. Par exemple, chaque noeud de requête 70 est doté de l'une des classes A, B, C, D, E, F, à savoir par exemple des classes A, B et F pour les noeuds de requête 70 illustrés sur la figure 3.

En particulier, les classes A, B, C, D, E, F attribuées aux noeuds de requête 70 sont choisies parmi les mêmes classes A, B, C, D, E, F que celles attribuées aux noeuds 62 des graphes de fichier 60. A titre d'illustration, le noeud de requête 70 « Il » du graphe de requête 68 présente la même classe, à savoir la classe A, que les noeuds 62 « Elle » des graphes de fichier 60, puisque chacun de ces noeuds 62, 70 représente le sujet des phrases correspondantes.

Lors de l'étape d'application 132, le module d'application 32 applique le graphe de requête 68 à la base de données d'index 26 pour obtenir, pour chaque fichier informatique 19, un premier score de similarité définissant une similarité entre le graphe de requête 68 et le fichier informatique 19.

Le terme « similarité » fait en particulier référence à des éléments identiques et à des éléments différents entre le graphe de requête 68 et la base de données d'index 26. Par exemple, le premier score de similarité dépend d'un nombre de différences entre des éléments du graphe de requête 68 et l'index de la base de données d'index 26.

Par exemple, le module d'application 32 envoie une requête à la base de données d'index 26 comprenant au moins les expressions définies par le graphe de requête 68, comme par exemple au moins « Il », « animaux » et « quintal », et reçoit des réponses indiquant, pour chaque fichier informatique 19, un nombre de fois que les expressions respectives ou les classes associées à ces expressions, sont présentes dans la base de données d'index 26 pour ce fichier. Il en est de même pour les requêtes issues d'images.

En particulier, le module d'application 32 met en oeuvre un modèle comparant les objets de l'index associées à un fichier donné parmi les fichiers informatiques 19, avec le graphe de requête 68, pour obtenir le premier score de similarité pour ce fichier informatique 19. Par exemple, le modèle compte, pour chaque fichier informatique 19, le nombre d'objets dans l'index qui à la fois renvoient à ce fichier informatique 19 et qui sont également définies par le graphe de requête 68. Chaque correspondance augmente le premier score de similarité.

Selon un exemple, le modèle du module d'application 32 est un modèle de sac de mots. Par exemple, le modèle est le modèle BM25, également appelé Okapi BM25.

De préférence, le modèle du module d'application 32 augmente le premier score de similarité non pas uniquement lorsqu'un objet défini par le graphe de requête 68 est identique à un objet de l'index. En complément ou selon une alternative, le modèle augmente le premier score de similarité lorsqu'un noeud de requête 70 présente la classe ou l'étiquette qui est également présente dans l'index pour ce fichier informatique 19. Ceci est particulièrement avantageux lorsque les fichiers informatiques 19 et la requête de recherche 66 sont des images, car cela évite une analyse des régions d'intérêt en tant que telles, et simplifie donc le calcul du premier score de similarité.

En référence à la figure 3, selon un exemple, le graphe de requête 68 comprend le noeud de requête 70 « Il » associé à la classe, ici une classe sémantique, A. L'index comprend l'expression « Elle » renvoyant au fichier informatique « Doc 1 » et au fichier informatique « Doc 2 », avec la classe sémantique A. Dans ce cas, le module d'application 32 augmente le premier score de similarité pour le fichier informatique « Doc 1 » et pour le fichier informatique « Doc 2 », car l'index comprend une expression associée à la même classe sémantique A que le noeud de requête 70 « Il ».

Lors de l'étape de listage 133, le module de listage 33 détermine une liste intermédiaire comprenant les graphes de connaissances classés selon le premier score de similarité. En particulier, le module de listage 33 reçoit le graphe de fichier 60 de chaque fichier informatique 19 en provenance du premier module de génération 22, et reçoit le premier score de similarité pour chaque fichier informatique 19. Le module de listage 33 classe ainsi les graphes de fichier 60, et obtient ainsi la liste intermédiaire.

Lors de l'étape de détermination 134, le module de détermination 34 détermine, pour chaque fichier informatique 19, un second score de similarité par comparaison du graphe de requête 68 avec le graphe de fichier correspondant 60. En particulier, le module de détermination 34 reçoit chaque graphe de fichier 60 et le graphe de requête 68 et détermine le second score de similarité par exemple en appliquant une stratégie de fusion, décrite plus en détail ci-après.

Lors de l'étape de fusion de graphes 136, le module de fusion de graphes 36 fusionne chaque graphe de fichier 60 avec le graphe de requête 68 selon la stratégie de fusion, pour obtenir un graphe de connaissances fusionné 74 pour chaque fichier informatique 19.

Chaque graphe de connaissances fusionné 74 comprend par exemple des nouveaux noeuds 76, obtenus par fusion des noeuds 62 et des noeuds de requête 70, et des nouveaux liens 78, obtenus par fusion des liens 64 et des liens de requête 72. Les nouveaux noeuds 76 présentent par exemple les mêmes caractéristiques que les noeuds 62, par exemple à l'exception du fait que chaque nouveau noeud 76 présente plusieurs objets.

En référence à la figure 3, le graphe de connaissances fusionné 74 obtenu par la fusion du graphe de fichier 60 du fichier informatique « Doc 2 » comprend par exemple le nouveau noeud 76 présentant les expressions « Tonne » et « Quintal », qui sont présentes dans les noeuds 62, 70 de la même classe sémantique B des graphes 60, 68. Dans le cas des images précédemment mentionnées, le graphe de connaissances fusionné 74 comprend un nouveau noeud 76 comprenant les régions d'intérêt de la même classe, par exemple un nouveau noeud 76 comprenant les régions d'intérêt délimitant l'enfant et l'adulte, et un deuxième noeud comprenant les régions d'intérêt délimitant le ballon de foot et la balle de tennis. Les autres nouveaux noeuds 76 et les nouveaux liens 78 sont obtenus en particulier de manière analogue.

De préférence, l'étape de détermination 134 et l'étape de fusion de graphes 136 sont mises en oeuvre simultanément. Par exemple, la stratégie de fusion permet de fusionner chaque graphe de fichier 60 avec le graphe de requête 68, et aussi de déterminer chaque second score de similarité.

La stratégie de fusion définit en particulier des règles de fusion des noeuds 62 des graphes de fichier 60 avec des noeuds de requête 70 en fonction des classes A, B, C, D, E, F. En complément facultatif, la stratégie de fusion définit des règles de fusion des liens 64 avec les liens de requête 72 selon les classes A, B, C, D, E, F associées aux liens 64 et aux liens de requête 72.

La stratégie de fusion comprend par exemple des règles de fusion génériques, et des bibliothèques d'heuristiques définissant des règles de fusion pour un domaine métier spécifique. Les bibliothèques d'heuristiques sont par exemple modifiables par l'utilisateur. Par exemple, les bibliothèques d'heuristiques sont adaptées pour prendre en compte des imperfections ou erreurs dans une partie des graphes de fichier 60 ou du graphe de requête 68, résultant par exemple d'une pluralité de sources d'informations différentes à partir desquelles les fichiers informatiques 19 sont obtenus.

Selon un exemple, la stratégie de fusion comprend une pluralité de fonctions pour la fusion qui sont déterminées en fonction de règles définies à l'aide d'une ontologie du domaine métier.

Selon un exemple, la stratégie de fusion définit un algorithme de recherche de sous-graphes communs maximaux (de l'anglais « Maximal subgraph isomorphism search »). Cet algorithme comprend par exemple deux phases, à savoir une première phase lors de laquelle des sous-graphes potentiellement compatibles sont recherchés, et une deuxième phase lors de laquelle les nouveaux noeuds 76, dont des exemples sont illustrés sur la figure 3, résultant de la fusion effective des sous-graphes compatibles découverts lors de la première phase, sont générés.

Par exemple, le second score de similarité dépend d'une partie identique ou similaire entre le graphe de requête 68 et du graphe de fichier 60 correspondant. Cette partie est déterminée selon la stratégie de fusion. Elle correspond par exemple aux sous-graphes potentiellement compatibles obtenues par l'algorithme de recherche de sous-graphes communs maximaux. Par « partie similaire », il est entendu en particulier que cette partie du graphe correspondant présente un nombre de différences, par rapport à l'identité totale, qui est inférieur à un seuil prédéterminé. Par exemple, la valeur de chaque second score de similarité ainsi obtenu correspond au nombre de noeuds 60, 70 et/ou liens 64, 72 communs entre le graphe de requête 68 et le graphe de fichier 60 respectif.

Lors de l'étape de fusion de scores 138, le module de fusion de scores 38 fusionne, pour chaque fichier informatique, le premier score de similarité avec le second score de similarité selon une fonction prédéterminée. Par exemple, la fonction prédéterminée est une combinaison linéaire du premier score de similarité avec le second score de similarité.

De préférence, chaque premier score de similarité et chaque second score de similarité est normé selon une fonction de normalisation, pour obtenir respectivement une valeur comprise entre 0 et 1. La fonction de normalisation est par exemple prédéterminée, par exemple en fonction d'une taille des fichiers informatiques 19 et/ou d'une taille de la requête de recherche 66.

Lors de l'étape de traitement additionnel 142, le module de traitement additionnel 42 groupe les graphes de connaissances fusionnés 74 selon au moins un critère de groupement. A titre d'exemple, le critère de groupement définit l'une des classes A, B, C, D, E, F ou un nombre de graphes. Cela permet ainsi par exemple d'extraire des fichiers informatiques 19 spécifiques parmi les graphes de connaissances fusionnés 74.

En complément ou en variante, l'étape de traitement additionnel 142 comprend une recherche dans les graphes de connaissances fusionnés 74 ou une nouvelle fusion, selon la stratégie de fusion, d'une partie des graphes de connaissances fusionnés 74.

Lors de l'étape d'émission 140, le module d'émission 40 génère le signal S comprenant une liste des graphes de connaissances fusionnés 74 et émet le signal S. Dans cette liste, les graphes de connaissances fusionnés 74, notamment obtenus lors de l'étape de fusion de graphes 136, sont classés selon les scores de fusion.

Un exemple de la liste comprenant les graphes de connaissances fusionnés 74 est illustré sur la figure 3. Dans cet exemple, la liste comprend à la première position le graphe de connaissances fusionné 74 associé au fichier informatique 19 « Doc 2 » et à la seconde position le graphe de connaissances fusionné 74 associé au fichier informatique 19 « Doc 1 ». Ces graphes étant classés dans la liste selon les scores de fusion, le fichier informatique 19 « Doc 2 » présente alors un score de fusion plus élevé (ou au moins égal) au score de fusion du fichier informatique 19 « Doc 1 ».

Lorsque le procédé comprend l'étape de traitement additionnel 142, le signal S comprend par exemple des données additionnelles obtenues lors de cette étape 142.

Selon une variante, l'étape de traitement additionnel 142 est mise en oeuvre comme suite à la mise en oeuvre de l'étape d'émission 140. Dans ce cas, l'étape de traitement additionnel 142 comprend l'une ou plusieurs des opérations décrites ci-dessus, appliquées au signal S.

Selon un exemple, le module d'émission émet le signal S vers le dispositif d'affichage 16 pour l'affichage de la liste selon signal S par le dispositif d'affichage 16. Dans ce cas, le dispositif d'affichage 16 affiche notamment la liste selon signal S.

Selon un autre exemple, ou en complément facultatif, le module d'émission émet le signal S vers la base de données de graphes 18 qui mémorise les graphes de connaissances fusionnés 74 par exemple en vue d'un traitement ou une prise de décision à partir du signal S.

De préférence, au moins certaines étapes, de préférence chaque étape, parmi la première étape de réception 120, la première étape de génération 122, l'étape d'indexation 124, la seconde étape de réception 128, la seconde étape de génération 130, l'étape d'application 132, l'étape de détermination 134, l'étape de fusion de graphes 136, l'étape de fusion de scores 138, et l'étape d'émission 140 comprend l'échange de données sous le format json.

On conçoit que le procédé de génération 100 et le système de génération 14 présentent un grand nombre d'avantages.

Par exemple, le procédé de génération 100 permet d'établir des liens et une structure à partir de fichiers informatiques 19 a priori désorganisés. Le procédé de génération 100 permet également d'obtenir un signal qui décrit une association particulièrement pertinente entre la requête de recherche 66 et les fichiers informatiques 19. En particulier, grâce à l'association des classes A, B, C, D, E, F aux noeuds 62, 70, une donnée additionnelle est obtenue, et des parties similaires ou identiques entre les graphes de fichier 60 et le graphe de requête 68 sont identifiées. De plus, grâce au signal S, la liste des graphes de connaissances fusionnés 74 est manipulable informatiquement par des traitements additionnels.

Par ailleurs, le procédé de génération 100 permet de réduire une quantité de données échangées, car le signal S fournit une réponse pertinente à la requête de recherche 66, et réduit ainsi notamment des échanges de données peu pertinentes.

L'homme du métier comprendra que les modes de réalisation précédemment décrits peuvent être combinés pour former de nouveaux modes de réalisation pourvu qu'ils soient compatibles techniquement.

## Revendications

1. Procédé de génération (100) d'un signal (S) comprenant des graphes de connaissances fusionnés (74), le procédé de génération (100) étant mis en oeuvre par ordinateur, et comprenant :
- une première étape de réception (120), à partir d'une base de données documentaire (11), d'une pluralité de fichiers informatiques (19) comprenant des objets associés les uns aux autres ;
- une première étape de génération (122), par une chaîne de traitement (48), d'un premier graphe de connaissances, dit graphe de fichier (60), pour chaque fichier informatique (19), chaque graphe de fichier (60) comprenant des noeuds (62) et des liens (64) reliant les noeuds (62), les noeuds (62) et les liens (64) étant représentatifs des associations entre les objets du fichier informatique (19) respectif, la chaîne de traitement (48) associant une classe (A, B, C, D, E, F) à chaque noeud (62) ;
- une étape d'indexation (124) des graphes de fichier (60) pour obtenir une base de données d'index (26) comprenant les expressions sous la forme d'un index ;
- une seconde étape de réception (128) d'une requête de recherche (66) ;
- une seconde étape de génération (130), par ladite chaîne de traitement (48), d'un second graphe de connaissances, dit graphe de requête (68), le graphe de requête (68) comprenant des noeuds de requête (70) et des liens de requête (72) représentatifs du texte de la requête de recherche (66), la chaîne de traitement (48) associant, à chaque noeud de requête (70), la classe (A, B, C, D, E, F) respective ;
- une étape d'application (132) du graphe de requête (68) à la base de données d'index (26) pour obtenir, pour chaque fichier informatique (19), un premier score de similarité définissant une similarité entre le graphe de requête (68) et le fichier informatique (19) ;
- une étape de détermination (134), pour chaque fichier informatique (19), d'un second score de similarité par comparaison du graphe de requête (68) avec le graphe de fichier (60) correspondant ;
- une étape de fusion de graphes (136) comprenant la fusion de chaque graphe de fichier (60) avec le graphe de requête (68) selon une stratégie de fusion, pour obtenir un graphe de connaissances fusionné (74) pour chaque fichier informatique (19),
- une étape de fusion de scores (138) comprenant la fusion, pour chaque fichier informatique (19), du premier score de similarité avec le second score de similarité selon une fonction prédéterminée, pour obtenir un score de fusion respectif ;
- une étape d'émission (140) du signal (S) comprenant une liste des graphes de connaissances fusionnés (74), les graphes de connaissances fusionnés (74) étant classés selon les scores de fusion.

2. Procédé de génération (100) selon la revendication 1, dans lequel l'étape d'indexation (124) comprend la génération d'une pluralité de groupes d'index, chaque groupe d'index étant un groupe parmi un groupe associé à un type des noeuds (62), un groupe associé à un type des liens (64) et un groupe d'index global comprenant l'ensemble des expressions de l'index.

3. Procédé de génération (100) selon la revendication 1 ou la revendication 2, dans lequel la chaîne de traitement (48) associe des étiquettes aux expressions de chaque fichier informatique (19) ou de la requête de recherche (66), chaque étiquette définissant un type d'expression parmi une pluralité de types.

4. Procédé de génération (100) selon l'une quelconque des revendications précédentes, dans lequel, lors de l'étape d'application (132), un modèle compare les expressions de l'index associées à un fichier parmi les fichiers informatiques (19), avec le graphe de requête (68), pour obtenir le premier score de similarité pour ce fichier informatique (19), le modèle étant de préférence un modèle de sac de mots, de préférence le modèle BM25.

5. Procédé de génération (100) selon l'une quelconque des revendications précédentes, dans lequel le second score de similarité dépend d'une partie identique ou similaire entre le graphe de requête (68) et le graphe de fichier (60) correspondant, ladite partie identique ou similaire étant déterminée selon la stratégie de fusion.

6. Procédé de génération (100) selon l'une quelconque des revendications précédentes, comprenant en outre une étape de listage (133), lors de laquelle une liste intermédiaire est déterminée, la liste intermédiaire comprenant les graphes de fichier (60) classés selon le premier score de similarité,
lors de l'étape de fusion de graphes (136), les graphes de fichier (60) selon la liste intermédiaire étant fusionnés avec le graphe de requête (68).

7. Procédé de génération (100) selon l'une quelconque des revendications précédentes, dans lequel la chaîne de traitement (48) comprend au moins un réseau de neurones recevant en entrée les objets relatifs aux graphes de fichier (60) et/ou relatifs au graphe de requête (68), et fournissant en sortie au moins un vecteur définissant la classe associée à chaque objet.

8. Procédé de génération (100) selon l'une quelconque des revendications précédentes, dans lequel, lors de l'étape d'émission (140), le signal (S) est émis vers un dispositif d'affichage (16) pour un affichage de la liste du signal (S) par le dispositif d'affichage (16), et/ou dans lequel, lors de l'étape d'émission (140), le signal (S) est émis vers une base de données de graphes (18) mémorisant les graphes de connaissances fusionnés (74).

9. Procédé de génération (100) selon l'une quelconque des revendications précédentes, dans lequel, chaque objet de la pluralité de fichiers informatiques (19) correspond à l'un des éléments choisi dans le groupe consistant en :
- une expression, présentant une structure sémantique ;
- une valeur d'un attribut d'une table de base de donnée ; et
- une région d'intérêt d'une image,
chaque objet de la pluralité de fichiers informatiques (19) correspondant au même élément.

10. Système de génération (14) d'un signal (S) comprenant des graphes de connaissances fusionnés (74), le système de génération (14) comprenant :
- un premier module de réception (20) configuré pour recevoir, à partir d'une base de données documentaire (11), une pluralité de fichiers informatiques (19) comprenant des objets associés les uns aux autres ;
- un premier module de génération (22) configuré pour générer, par une chaîne de traitement (48), un premier graphe de connaissances, dit graphe de fichier (60), pour chaque fichier informatique (19), chaque graphe de fichier (60) comprenant des noeuds (62) et des liens (64) reliant les noeuds (62), les noeuds (62) et les liens (64) étant représentatifs des associations entre les objets du fichier informatique (19) respectif, la chaîne de traitement (48) étant configurée pour associer une classe (A, B, C, D, E, F) à chaque noeud (62) ;
- un module d'indexation (24) configuré pour indexer les graphes de fichier (60) pour obtenir une base de données d'index (26) comprenant les expressions sous la forme d'un index ;
- un second module de réception (28) configuré pour recevoir une requête de recherche (66) ;
- un second module de génération (30) configuré pour générer, par ladite chaîne de traitement (48), un second graphe de connaissances, dit graphe de requête (68), le graphe de requête (68) comprenant des noeuds de requête (70) et des liens de requête (72) représentatifs du texte de la requête de recherche (66), la chaîne de traitement (48) étant configurée pour associer, à chaque noeud de requête (70), la classe (A, B, C, D, E, F) respective ;
- un module d'application (32) configuré pour appliquer le graphe de requête (68) à la base de données d'index (26) pour obtenir, pour chaque fichier informatique (19), un premier score de similarité définissant une similarité entre le graphe de requête (68) et le fichier informatique (19) ;
- un module de détermination (34) configuré pour déterminer, pour chaque fichier informatique (19), un second score de similarité par comparaison du graphe de requête (68) avec le graphe de fichier (60) correspondant ;
- un module de fusion de graphes (36) configuré pour fusionner chaque graphe de fichier (60) avec le graphe de requête (68) selon une stratégie de fusion, pour obtenir un graphe de connaissances fusionné (74) pour chaque fichier informatique (19),
- un module de fusion de scores (38) configuré pour fusionner, pour chaque fichier informatique (19), le premier score de similarité avec le second score de similarité selon une fonction prédéterminée, pour obtenir un score de fusion respectif ;
- un module d'émission (40) configuré pour émettre le signal (S) comprenant une liste des graphes de connaissances fusionnés (74), les graphes de connaissances fusionnés (74) étant classés selon les scores de fusion.

11. Produit programme d'ordinateur comportant un support lisible d'informations, sur lequel est mémorisé un programme d'ordinateur comprenant des instructions de programme, le programme d'ordinateur étant chargeable sur une unité de traitement de données et mettant en oeuvre un procédé de génération (100) selon l'une quelconque des revendications 1 à 9 lorsque le programme d'ordinateur est mis en oeuvre sur l'unité de traitement des données.
